# EUROPÄISCHE PATENTSCHRIFT

(11) **EP 2 758 317 B1**
(45) Veröffentlichungstag und Bekanntmachung des Hinweises auf die Patenterteilung: **27.06.2018**
(21) Anmeldenummer: 12710099.8
(22) Anmeldetag: 23.03.2012
(51) Int. Cl.: B65D 25/42, B65D 25/48, B65D 47/36, H01M 8/04

(54) **VORRICHTUNG ZUM AUFNEHMEN, SPEICHERN, TRANSPORTIEREN UND ABGEBEN EINER FLÜSSIGKEIT, SOWIE GESAMTSYSTEM UND FAHRZEUG MIT EINEM SOLCHEN GESAMTSYSTEM**
DEVICE FOR RECEIVING, STORING, TRANSPORTING, AND DISPENSING A LIQUID, COMPLETE SYSTEM, AND VEHICLE WITH SUCH A COMPLETE SYSTEM
DISPOSITIF DE RÉCEPTION, DE STOCKAGE, DE TRANSPORT ET DE DISTRIBUTION D'UN LIQUIDE, AINSI QUE SYSTÈME GLOBAL ET VÉHICULE MUNI D'UN TEL SYSTÈME GLOBAL

(30) Priorität: 21.09.2011 EP 11182203
(43) Veröffentlichungstag der Anmeldung: 30.07.2014
(73) Patentinhaber: Silicon Fire AG, 6045 Meggen (CH)
(72) Erfinder: GRAUER, Peter, CH-6045 Meggen (CH)
(74) Vertreter: Heusch, Christian
(86) Internationale Anmeldenummer: PCT/EP2012/055229
(87) Internationale Veröffentlichungsnummer: WO 2013/041249

(56) Entgegenhaltungen:
- WO-A1-01/05670
- DE-U1- 9 002 135
- GB-A- 2 279 069
- GB-A- 2 342 347
- US-A- 5 518 050
- US-A1- 2007 072 042

## Beschreibung

Die vorliegende Anmeldung betrifft eine Vorrichtung (Tankpatronen genannt) zum Aufnehmen, Speichern, Transportieren und Abgeben einer Flüssigkeit, sowie ein Gesamtsystem und ein Fahrzeug mit einem solchen Gesamtsystem.

Die vorliegende Anmeldung beansprucht die Priorität der europäischen Patentanmeldung EP 11182203.7, die am 21. September 2011 im Namen des vorliegenden Anmelders beim Europäischen Patentamt eingereicht wurde.

Bisher werden Treibstoffe in den meisten Fällen über Zapfsäulen an Tankstellen verkauft. Das gilt nicht nur für fossile Treibstoffe sondern auch für alternative Treibstoffe, wie z.B. Bio-Ethanol oder Wasserstoff.

Vermehrt wird es Elektro-Fahrzeuge oder Hybrid-Fahrzeuge geben, die entweder mit Brennstoffzellen ausgestattet sind, oder die z.B. einen Verbrennungsmotor als "Range-Extender" (Reichweitenverlängerer genannt) aufweisen, um an Bord eines Fahrzeugs Strom zu erzeugen, der in einer Batterie gespeichert wird. Ein solcher Range-Extender wird von einem konventionellen Tank mit Treibstoff beschickt, um den Treibstoff zum Antreiben eines Elektrogenerators zu verbrennen.

Aus der US-Patentanmeldung US2007/0072042 A1 ist bekannt eine Brennstoffzelle über eine Patrone mit Brennstoff, z.B. in Form von Methanol, zu befüllen. Eine entsprechende Patrone weist einen Hals auf, der in ein Gerät eingeschraubt werden kann. Im Hals der Patrone sitzt ein Ventil, eine Trennwand oder ein durchtrennbares Element.

Neueste Entwicklungen ermöglichen das Herstellen von Methanol aus Kohlendioxid und Wasserstoff. Beispiele hierfür sind z.B. den folgenden

Patentanmeldungen zu entnehmen:
- Internationale Patentanmeldung mit der Publikationsnummer WO2010069622A1, die am 13. August 2009 unter dem Titel "VERFAHREN UND ANLAGE ZUM BEREITSTELLEN EINES ENERGIETRÄGERS UNTER EINSATZ VON KOHLENSTOFFDIOXID ALS KOHLENSTOFFLIEFERANT UND VON ELEKTRISCHER ENERGIE" beim Europäischen Patentamt eingereicht wurde. Bei dieser internationalen Patentanmeldung geht es um einen intelligenten Energiemix mit einer wirtschaftlich und ökologisch möglichst optimalen Kombination regenerativer und konventioneller Stromversorgung im Zusammenhang mit der Herstellung von Methanol.
- Internationale Patentanmeldung mit der Publikationsnummer WO2011018124A1, die am 9. September 2009 unter dem Titel "Verfahren und Anlage zum Bereitstellen eines kohlenwasserstoff-basierten Energieträgers unter Einsatz eines Anteils von regenerativ erzeugtem Methanol und eines Anteils von Methanol, der mittels Direktoxidation oder über partielle Oxidation oder über Reformierung erzeugt wird" beim Europäischen Patentamt eingereicht wurde. Bei dieser internationalen Patentanmeldung geht es um den Einsatz eines Anteils von regenerativ erzeugtem Methanol und eines Anteils von Methanol, der mittels Direktoxidation oder über partielle Oxidation oder über einen Reformierungsprozess erzeugt wird.
- Internationale Patentanmeldung mit der Anmeldenummer PCT/EP2010/064948, die am 6. Oktober 2010 unter dem Titel "VERFAHREN UND ANLAGE ZUR SYNTHESE VON KOHLENWASSERSTOFF" beim Europäischen Patentamt eingereicht wurde. Bei dieser internationalen Patentanmeldung geht es um einen besonders vorteilhaften Reaktor für die Methanolsynthese unter Einsatz eines Synthesegases aus Kohlendioxid (CO₂) und Wasserstoff (H₂).
- Internationale Patentanmeldung mit der Anmeldenummer PCT/EP2010/067812, die am 10. November 2010 unter dem Titel "METHOD AND APPARATUS FOR THE INTEGRATION SYNTHESIS OF METHANOL IN A PLANT" beim Europäischen Patentamt eingereicht wurde. Bei dieser internationalen Patentanmeldung geht es um eine Methanolsynthese, die in eine Gesamtanlage integriert ist. Kohle oder Kohlenwasserstoff wird in einer Brennkammer zusammen mit angereichertem Sauerstoffgas verbrannt. Das Sauerstoffgas stammt aus einer Wasser-Elektrolyse. Aus dem Abgas dieses Verbrennungsprozesses wird Kohlendioxid heraus gewaschen und einer Reformierungsanlage übergeben. Dort wird das Kohlendioxid zusammen mit gasförmigem Kohlenwasserstoff zu einem Synthesegas umgesetzt, das Kohlenmonoxid und Wasserstoff enthält. Das Synthesegas wird nun zusammen mit weiterem Wasserstoff, der aus der genannten Wasser-Elektrolyse stammt, in einem Reaktor zu Methanol umgesetzt.
- Europäische Patentanmeldung mit der Anmeldenummer EP11155310.3, die am 22. Februar 2011 unter dem Titel "Verfahren zur Bereitstellung und zum Einsetzen eines Alkohols und Verwendung des Alkohols zur Wirkungsgrad- und Leistungssteigerung einer Verbrennungskraftmaschine" beim Europäischen Patentamt eingereicht wurde. Bei dieser Patentanmeldung geht es um die Verwendung eines Alkohols (vorzugsweise eines Methanol-Wasser-Gemischs) zur Wirkungsgrad- und Leistungssteigerung einer Verbrennungskraftmaschine, wie zum Beispiel einer Dieselkraftmaschine.

Die in diesen Dokumenten beschriebenen Verfahren basieren auf dem Einsatz von Kohlendioxid zur Herstellung von Methanol. Damit ergibt sich die Möglichkeit Kohlendioxid zu rezyklieren. Das entsprechend hergestellte Methanol wird, je nach Herstellverfahren und Energieeinsatz, als CO₂-neutral oder mindestens teilweise CO₂-neutral betrachtet.

Methanol ist ein besonders vorteilhafter Alkohol, da er der einfachste Alkohol ist, den es gibt. Methanol wird in Zukunft vermehrt im Zusammenhang mit Mobilität eingesetzt werden und zwar entweder um Direkt-Methanol-Brennstoffzellen zu betreiben, oder um in Verbrennungsmotoren (z.B. in einem Range-Extender) umgesetzt zu werden.

Es besteht für die eingangs erwähnten Anwendungen der Bedarf für die Bereitstellung solcher Treibstoffe, Brennstoffe oder Heizstoffe, wie z.B. Methanol, unabhängig von gängigen Tankstellen und unabhängig von der bisher existierenden Infrastruktur. Die Gegebenheiten in Sachen Mobilität werden sich in den nächsten Jahren deutlich verändern. Ideal wäre daher der Aufbau einer Vertriebskette, die zum Beispiel auf Verkaufsstellen in verschiedenen Geschäften beruht. Hierzu bedarf es aber eines Behälters, der in der Lage ist den Treibstoff, Brennstoff oder Heizstoff sicher zu speichern. Ausserdem muss die Handhabung dieses Behälters manipulationssicher und gefahrlos sein.

Es stellt sich nun die Aufgabe, einen entsprechenden Behälter bereit zu stellen, der geeignet ist Treibstoffe, Brennstoffe oder Heizstoffe aufzunehmen, zu speichern, zu transportieren und abzugeben.

Insbesondere geht es auch um die Bereitstellung eines Gesamtsystems aus Behälter und einem optionalen (Puffer-)Tank, das ein problemloses und sicheres Betanken des Tanks (Umfüllen) oder Fahrzeugs durch den Einsatz eines Behälters ermöglicht.

Gemäss Erfindung wird eine Vorrichtung zum Aufnehmen, Speichern, Transportieren und Abgeben einer Flüssigkeit bereit gestellt. Die Vorrichtung umfasst einen Container mit einer Abgabevorrichtung zum Abgeben der Flüssigkeit. Die Abgabevorrichtung hat eine Hohlzylinderform und ist im Bereich einer ersten containernahen Seite mit dem Container verbunden. Im Bereich einer zweiten Seite weist sie eine Auslassöffnung auf. Im Bereich der ersten containernahen Seite ist eine Schutzschicht vorgesehen, die im intakten Zustand ein Austreten der Flüssigkeit vom Container in die Abgabevorrichtung verhindert. Die Schutzschicht ist gegenüber der Auslassöffnung um einen Mindestabstand zurückversetzt angeordnet, um sie vor Zerstörung oder unbefugter bzw. ungewollter Manipulation zu schützen.

Die vorliegende Erfindung kann nicht nur im Zusammenhang mit Fahrzeuen, wie Elektrofahrzeugen, eingesetzt werden. Sie eignet sich auch für zahlreiche andere motorangetriebene Gerätschaften und Einrichtungen, wie zum Beispiel Gartengeräte (Rasenmäher), Küchen- und Haushaltsgeräte, Computer, Hilfsaggregate, Belüftungssysteme, Alarmsysteme, Notsysteme und dergleichen.

Weitere vorteilhafte Ausführungsformen sind der Beschreibung, den Figuren und den abhängigen Ansprüchen zu entnehmen.

In den Zeichnungen sind verschiedene Aspekte der Erfindung schematisch dargestellt.
- Fig. 1:: zeigt ein Schema, das die grundlegenden Schritte eines Verfahrens zur Herstellung von Methanol wiedergibt, wobei gemäß Erfindung das Methanol in eine Tankpatrone abgefüllt wird, statt an einer Zapfsäule zum Betanken bereitgestellt zu werden;
- Fig. 2:: zeigt eine stark schematisierte Schnittdarstellung einer ersten erfindungsgemässen Vorrichtung, wobei eine Hand mit ausgestrecktem Zeigefinger gezeigt ist, um anzudeuten, dass die Schutzschicht der Vorrichtung nicht mit dem Finger erreicht werden kann;
- Fig. 3A:: zeigt eine stark schematisierte Perspektivdarstellung einer weiteren Ausführungsform eines Containers beim Befüllen mit Flüssigkeit;
- Fig. 3B:: zeigt eine stark schematisierte Perspektivdarstellung des Containers nach Fig. 3A nach dem Befüllen und vor dem Einbringen einer Schutzschicht und dem Anbringen einer Abgabevorrichtung;
- Fig. 3C:: zeigt eine stark schematisierte Schnittdarstellung, die im Wesentlichen dem in Fig. 3B Gezeigten entspricht;
- Fig. 3D:: zeigt eine stark schematisierte Schnittdarstellung des Containers nach dem Einbringen der Schutzschicht und dem Anbringen der Abgabevorrichtung;
- Fig. 3E:: zeigt eine stark schematisierte Schnittdarstellung des Containers samt Schutzschicht und Abgabevorrichtung im umgedrehten, einsatzbereiten Zustand;
- Fig. 3F:: zeigt eine stark schematisierte Schnittdarstellung eines Gesamtsystems mit einem (Puffer-)Tank und einer Vorrichtung, die den Container samt Schutzschicht und Abgabevorrichtung umfasst, wobei die Vorrichtung auf den Tank aufgesetzt wurde und Flüssigkeit aus dem Container in den Tank fliesst;
- Fig. 4A:: zeigt eine stark schematisierte Schnittdarstellung einer weiteren Ausführungsform nach dem Befüllen mit Flüssigkeit und vor dem Anbringen einer Abgabevorrichtung samt Membran, die als Schutzschicht dient;
- Fig. 4B:: zeigt eine stark schematisierte Schnittdarstellung des Containers nach Fig. 4A nach dem Anbringen der Abgabevorrichtung samt Membran und dem Anbringen einer Überwurfmutter, die zum Fixieren der Abgabevorrichtung samt Membran dient;
- Fig. 4C:: zeigt eine stark schematisierte Schnittdarstellung eines weiteren Gesamtsystems mit einem (Puffer-)Tank und einer Vorrichtung, die den Container samt Schutzschicht in Form einer Membran und die Abgabevorrichtung umfasst, wobei die Vorrichtung auf den Tank aufgesetzt wurde und Flüssigkeit aus dem Container in den Tank fliesst;
- Fig. 5:: zeigt eine stark schematisierte Perspektivdarstellung einer weiteren Vorrichtung umfassend einen Container und eine Abgabevorrichtung, die mit zwei Schutzschichten versehen ist;
- Fig. 6:: zeigt eine stark schematisierte Perspektivdarstellung einer weiteren Vorrichtung umfassend einen Container und eine Abgabevorrichtung, die mit einer Schutzschicht und einem unten liegenden Manipulationsschutz versehen ist;
- Fig. 7A:: zeigt eine stark schematisierte Perspektivdarstellung eines weiteren Containers, der mit einem mindestens teilweise innen liegenden Stutzen versehen ist;
- Fig. 7B:: zeigt eine stark schematisierte Perspektivdarstellung einer weiteren Abgabevorrichtung, die mit einer Membran versehen ist;
- Fig. 7C:: zeigt eine stark schematisierte Perspektivdarstellung einer Vorrichtung umfassend einen Container nach Fig. 7A und eine Abgabevorrichtung nach Fig. 7B;
- Fig. 8:: zeigt eine stark schematisierte Ansicht eines Fahrzeugs im Moment des Umfüllens eines Treibstoffs aus einer Vorrichtung in einen (Puffer-)Tank;
- Fig. 9:: zeigt eine stark schematisierte Ansicht eines Fahrzeugs mit seriellem Hybridantrieb;
- Fig. 10A:: zeigt eine stark schematisierte Ansicht einer Vorrichtung der Erfindung und der Mittel, die zum Sichern der Vorrichtung in einem Fahrzeug dienen, in einem geöffneten Zustand;
- Fig. 10B:: zeigt eine stark schematisierte Ansicht der Vorrichtung nach Fig. 10A in einem geschlossenen Zustand;
- Fig. 11:: zeigt eine Perspektivdarstellung einer Vorrichtung umfassend einen Container und eine Abgabevorrichtung gemäss Erfindung.

Der Begriff Flüssigkeit 108 wird hier verwendet für jegliche Arten von Flüssigkeiten. Insbesondere geht es gemäss Erfindung um Flüssigkeiten 108, die brennbar und/oder chemisch reaktiv sind. Insbesondere geht es um Treibstoffe, Brennstoffe oder Heizstoffe, wie Methanol.

Der Begriff Container 21 wird hier verwendet für einen Behälter oder ein Gebinde, das geeignet ist eine Flüssigkeit 108 aufzunehmen, zu speichern und bei Bedarf abzugeben. Vorzugsweise ist der Container 21 bei allen Ausführungsformen aus einem Kunststoff gefertigt. Besonders geeignet ist PET (Polyethylenterephthalat), PP (Polypropylen), HDPE (High Density Polyethylen), HM-HDPE (High-molecular-weight polyethylene), UHM-HDPE (Ultra-high-molecular-weight polyethylene) oder ein Fluorelastomer, wie zum Beispiel PTFE (Polytetrafluorethylen), oder ein Fluorthermoplast. Auch geeignet sind Kunststoffe, die mit einer Fluorpoylmerbeschichtung (z.B. hydrophobes PTFE) oder mit einer EVOH-Beschichtung (EVOH steht für Ethylen-Vinylalkohol-Copolymer) versehen sind.

Ganz besonders geeignet sind Container 21, die durch Coextrusion aus den genannten Materialien oder Materialkombinationen hergestellt werden oder Container 21, die mit einem der genannten Materialien durch nachträgliches Auftragen (innen-)beschichtet sind.

Ganz besonders geeignet sind Container 21 oder Vorichtungen 20, die durch Coextrusion in Form eines Mehrschichtextrudats (hier vorzugsweise mit einer Trägerschicht aus PET, PP, HDPE, HM-HDPE, UHM-HDPE und einer Innenschicht aus PTFE oder EVOH) hergestellt wurden. Durch die Coextrusion werden Formteile hergestellt, aus denen durch weitere Bearbeitungschritte dann die Container 21 oder die Vorichtungen 20 hergestellt werden.

Ganz besonders geeignet sind Container 21 oder Vorichtungen 20, die aus Rohlingen (Preforms) mittels eines Streckblas- oder Blasformverfahrens hergestellt werden. Die Rohlinge werden vorzugsweise extrudiert oder im Spritzgussverfahren hergestellt. Das Spritzgussverfahren und das Streckblas- oder Blasformverfahren können auch prozesstechnisch miteinander kombiniert werden, um so die Container 21 oder Vorichtungen 20 herzustellen.

Ganz besonders geeignet sind Container 21, die eine omniphob ausgeführte oder nano-beschichtete (Innen-)Oberfläche haben. Eine omniphobe und eine nano-beschichtete Oberfläche hat hervorrangende Eigenschaften und stösst den Treibstoff (z.B. Methanol) zuverlässig ab. Solche Vorrichtungen 20 brauchen nicht oder nur selten gereinigt zu werden.

Es können bei allen Ausführungsformen z.B. Euroform-Kunststoff-Kanister als Container 21 dienen, die entsprechend der Erfindung ausgebildet sind.

Es können bei allen Ausführungsformen z.B. (Vierkant- oder Zylinder-) Kunststoff Flaschen als Container 21 eingesetzt werden, die entsprechend der Erfindung ausgebildet sind.

Vorzugsweise erfüllt der Container 21 bei allen Ausführungsformen eine oder mehrere der folgenden Kriterien:
- transparent,
- stapelbar,
- chemikalienbeständig,
- mineralölbeständig,
- methanolbeständig,
- geruchsdicht,
- explosionsgeschützt,
- gegen Überdruck geschützt,
- alterungsfest,
- rezyklierbar,
- leicht zu reinigen,
- beschriftbar.

Vorzugsweise hat der Container 21 bei allen Ausführungsformen in einem Horizontalschnitt eine runde, ovale, polygonale oder rechteckige Form und in einem Vertikalschnitt eine runde, ovale, rechteckige oder trichterförmige Form.

Der Begriff Abgabevorrichtung 30 wird hier verwendet für einen hohlzylinderförmigen (Rohr- oder Schlauch-)Körper, der mit dem Container 21 verbunden oder verbindbar ist. Vorzugsweise hat die Abgabevorrichtung 30 bei allen Ausführungsformen die Form eines Rohres oder eines Schlauchs.

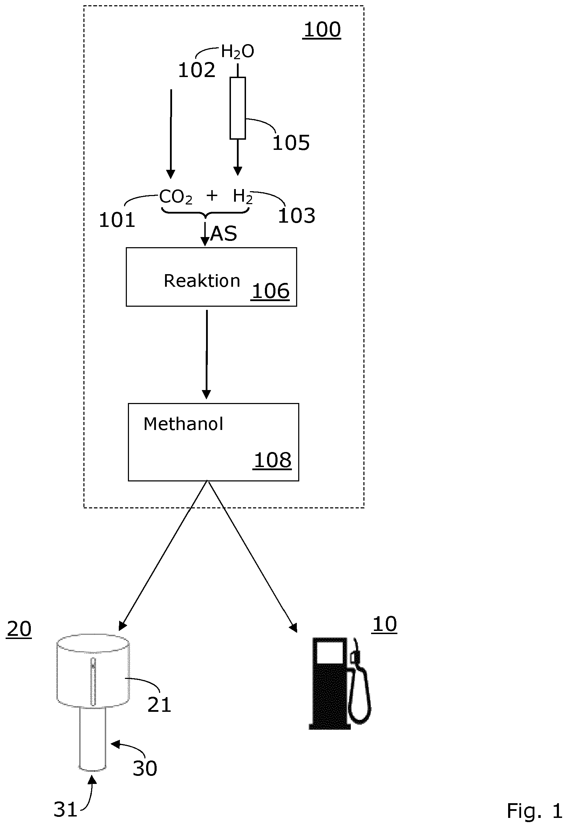

Fig. 1 zeigt ein Schema, das die grundlegenden Schritte eines Verfahrens zur Herstellung von Methanol (als Flüssigkeit 108) wiedergibt. Wasser 102 kann im Rahmen einer Wasser-Elektrolyse 105 zu Wasserstoff 103 und Sauerstoff (nicht gezeigt) umgesetzt werden. Zusätzlich wird Kohlendioxid 101 zugeführt. Die Kombination aus Wasserstoff 103 und Kohlendioxid 101 wird in einem geeigneten molaren Verhältnis einer Reaktion 106 (vorzugsweise einer katalytischen Reaktion) unterzogen. Dabei entsteht Methanol als Flüssigkeit 108. Diese Flüssigkeit 108 kann in eine Vorrichtung 20 abgefüllt werden, wie im Folgenden beschrieben, statt über eine Zapfsäule 10 abgegeben zu werden.

Der beschriebene Prozess kann z.B. in einer Silicon-Fire Anlage 100 ablaufen, wie zum Beispiel in der eingangs genannten internationalen Patentanmeldung mit der Publikationsnummer WO2010069622A1 beschrieben.

Gemäß Erfindung wird das Methanol 108 also in eine Tankpatrone 20 abgefüllt wird, statt an einer Zapfsäule 10 zum Betanken bereitgestellt zu werden. Die Tankpatrone 20 kann problemlos in einem Fahrzeug 201 mitgeführt werden, um bei Bedarf zum Einsatz zu kommen, oder an der Tankstelle oder bei einer anderen Verkaufsstelle kann die Flüssigkeit 108 direkt aus der Tankpatrone 20 in einen Tank 60 des Fahrzeugs 201 umgefüllt werden. Dieses schlauchlose Betanken geht schnell und sauber von Statten.

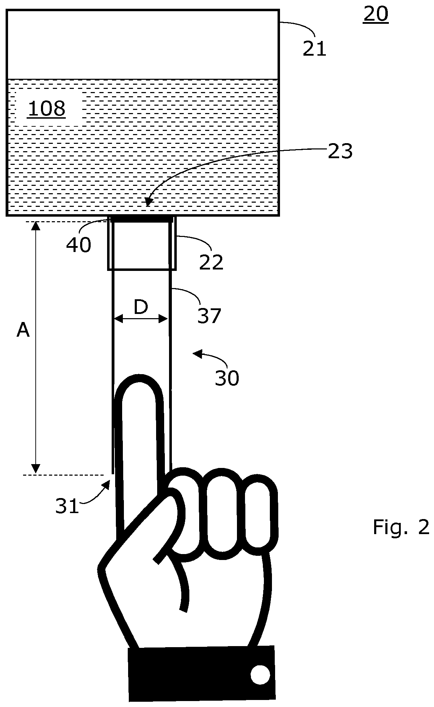

Fig. 2 zeigt eine stark schematisierte Schnittdarstellung einer ersten erfindungsgemässen Vorrichtung 20, wobei eine Hand mit ausgestrecktem Zeigefinger gezeigt ist, um anzudeuten, dass man mit dem Finger die innenliegende, zurückversetzte Schutzschicht 40 der Vorrichtung 20 nicht erreichen kann. Die Vorrichtung 20 ist bei allen Ausführungsformen zum Aufnehmen, Speichern, Transportieren und Abgeben einer Flüssigkeit 108 ausgelegt. Sie umfasst zu diesem Zweck einen Container 21. In Fig. 2 ist der Container 21 zu ca. 2/3 mit der Flüssigkeit 108 befüllt. Weiterhin umfasst die Vorrichtung 20 eine Abgabevorrichtung 30, die zum Abgeben der Flüssigkeit 108 ausgelegt ist. Die Abgabevorrichtung 30 hat eine Hohlzylinderform und ist an einer ersten containernahen Seite mit dem Container 21 verbunden. An einer zweiten Seite weist die Abgabevorrichtung 30 eine Auslassöffnung 31 auf. Im Bereich der ersten containernahen Seite ist eine Schutzschicht 40 vorgesehen, die im intakten Zustand ein Austreten der Flüssigkeit 108 vom Container 21 in die Abgabevorrichtung 30 verhindert. Ausserdem dient die Schutzschicht 40 als Geruchstschutz und Barriere gegen Verschmutzung. In den Figuren ist die Schutzschicht 40 relativ dick dargestellt, um sie besser kenntlich zu machen. Die Schutzschicht 40 ist im gezeigten Beispiel in Bezug gegenüber der Auslassöffnung 31 um einen Mindestabstand A zurückversetzt angeordnet. Die Auslassöffnung 31 kann zusätzlich oder alternativ einen Innendurchmesser D haben, der ein Eingreifen mit dem Finger verhindert.

Alle Ausführungsformen der Erfindung haben mindestens einen doppelten Schutz. Einerseits haben alle Ausführungsformen die erwähnte Schutzschicht 40, um ein Auslaufen der Flüssigkeit 108 zu verhindern. Andererseits ist die Schutzschicht 40 so zurückversetzt, dass sie nicht mit einem Finger erreicht und manipuliert werden kann. Zu diesem Zweck beträgt der Mindestabstand A mindesten 6 cm und/oder der Innendurchmesser D maximal 1 cm. Das Zurückversetzen wird hier auch als Manipulationsschutz bezeichnet.

Vorzugsweise umfassen alle Ausführungsformen einen innen oder aussen liegenden Stutzen 22 am Container 21. Die in Fig. 2 gezeigte Ausführungsform hat einen aussen liegenden Stutzen 22, dessen Länge hier ca. ¼ des Abstands A entspricht. Die Länge des Stutzens 22 kann bei allen Ausführungsformen aber auch anders gewählt werden.

Der Stutzen 22 kann ganz ausserhalb des Containers 21 liegen, er kann zum Teil ins Innere des Containers 21 ragen, oder er kann komplett im Inneren sitzen. Je nach Anordnung des Stutzens 22 muss die Auslauföffnung 23 für das Auslaufen der Flüssigkeit 108 unterschiedlich ausgeführt und/oder angeordnet sein. Vorzugsweise liegt diese Auslauföffnung 23 stets am tiefsten Punkt des Containers 21, um ein Auslaufen durch Schwerkraftwirkung zu ermöglichen.

Die Schutzschicht 40 ist bei allen Ausführungsformen so ausgeführt, dass sie mechanisch durchstossen, durchtrennt oder zerstört werden kann. Zu diesem Zweck ist an einem Tank 60 (vorzugsweise handelt es sich bei allen Ausführungsformen um einen fahrzeug-seitigen Tank) oder einem anderen, fahrzeugseitigen Aufnahmemittel ein mechanisches Gegenstück 61 angeordnet, das beim Ansetzen oder Aufsetzen der Vorrichtung 20 die Schutzschicht 40 mechanisch durchstösst, durchtrennt oder zerstört.

Das mechanische Gegenstück 61 kann bei allen Ausführungsformen stationär angeordnet sein oder es kann beweglich (zustellbar) angeordnet sein.

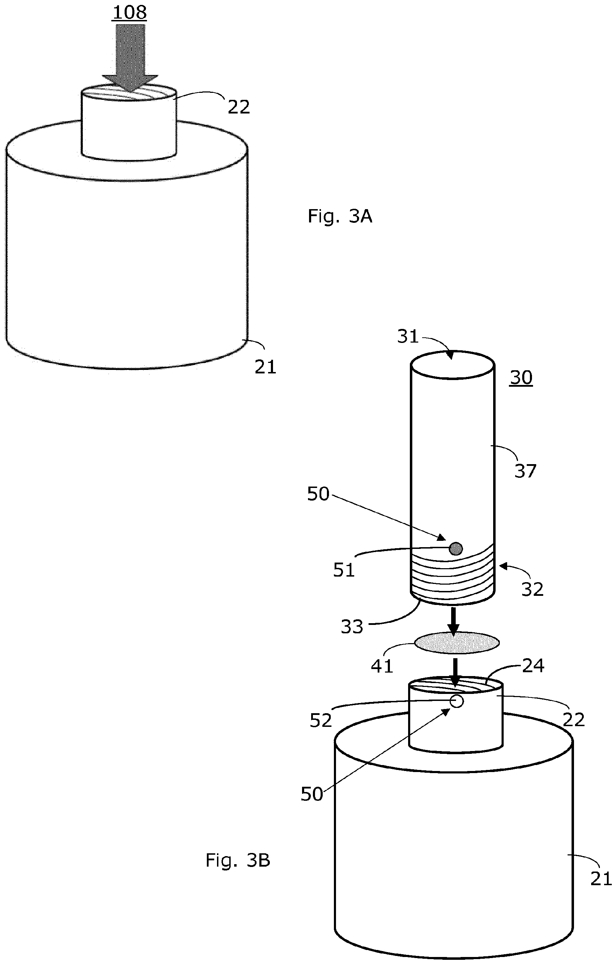

In Fig. 3A sind Details einer weiteren Ausführungsform gezeigt. Die Vorrichtung 20 kann umgekehrt werden, um durch den Stutzen 22 hindurch mit der Flüssigkeit 108 befüllt zu werden. Das Befüllen mit Flüssigkeit 108 ist in Fig. 3A durch den nach unten weisenden Blockpfeil dargestellt.

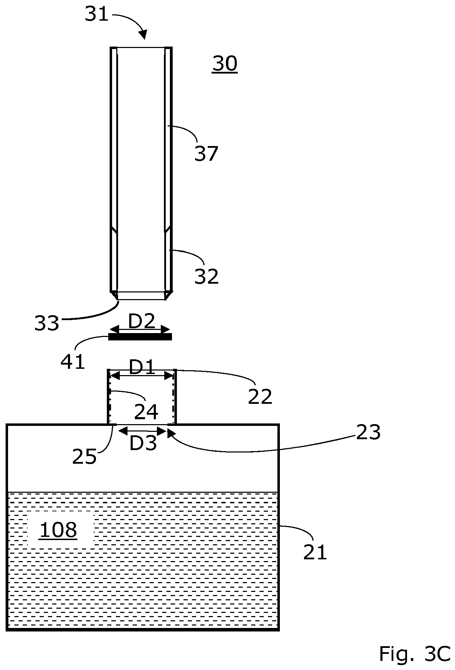

In Fig. 3B ist eine stark schematisierte Perspektivdarstellung des Containers 21 nach Fig. 3A nach dem Befüllen und vor dem Einbringen einer Schutzschicht 40 und dem Anbringen einer Abgabevorrichtung 30 gezeigt. Fig. 3C zeigt eine korrespondierende, stark schematisierte Schnittansicht.

In Fig. 3B und 3C sind Schritte gezeigt, die nach dem Befüllen folgen können. Nach dem Befüllen kann eine Schutzschicht 40, hier in Form einer separaten kreisförmigen Folie 41, in den Stutzen 22 eingebracht werden. Die Folie 41 hat einen Aussendurchmesser D2, der geringfügig kleiner ist als der Innendurchmesser D1 des Stutzens 22. Im gezeigten Beispiel befindet sich im Übergangsbereich zwischen Stutzen 22 und Container 21 eine Ringschulter 25. Die Ringschulter 25 hat einen Innendurchmesser D3, der kleiner ist als der Aussendurchmesser D2 der Folie 41.

Vorzugsweise kommt bei allen Ausführungsformen eine Einschicht- oder Mehrschicht-Folie 41 zum Einsatz.

Vorzugsweise kommt bei allen Ausführungsformen eine Kunststoff-Folie 41 zum Einsatz.

Vorzugsweise kommt bei allen Ausführungsformen eine Folie 41 zum Einsatz, deren Verformungsverhalten (d.h. deren Elastizität) und physikalische Bersteigenschaft (d.h. deren Versagenseigenschaften) so eingestellt wurden, dass die Folie 41 bei der mechanischen Wechselwirkung mit dem Gegenstück 61 zerstört wird und sich die Reste der Folie 41 zurückziehen/zusammenziehen. Bei gleichmäßigem Flächendruck sollte sich die Folie 41 nicht einfach zerstören lassen, wohingegen sie bei einer punktuellen Belastung durch Einwirkung des Gegenstücks 61 zerbersten soll.

Nun kann die Abgabevorrichtung 30 mit dem Stutzen 22 verbunden werden. Hier hat die Abgabevorrichtung 30 ein Aussengewinde 32 und der Stutzen 22 ein komplementäres Innengewinde 24. Die Verbindung wird durch das Einschrauben der Abgabevorrichtung 30 in den Stutzen 22 hergestellt.

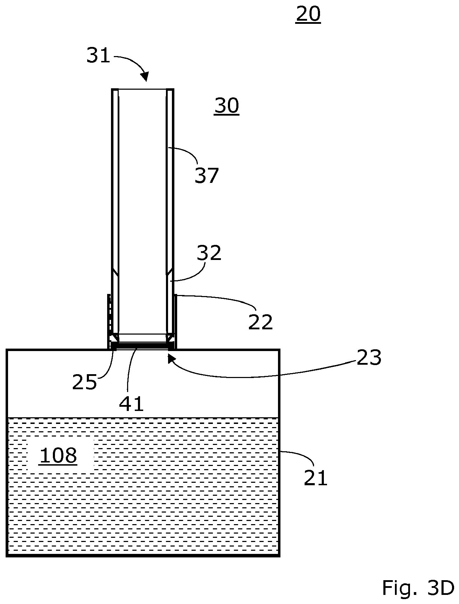

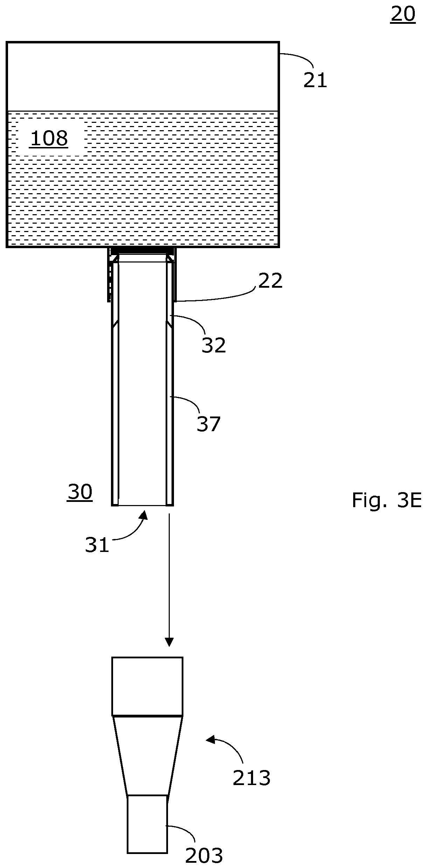

Im montierten Zustand, der schematisch in Fig. 3D gezeigt ist, liegt die Folie 41 auf der Ringschulter 25 auf und dichtet im intakten Zustand die Auslauföffnung 23 ab. Die Folie 41 wird durch die ringförmige Unterkante 33 (siehe Fig. 3B und 3C) der Abgabevorrichtung 30 in Position gehalten und gegen die Ringschulter 25 gepresst. Wenn man nun die gesamte Vorrichtung 20 umdreht, wie in Fig. 3E gezeigt, so kann keine Flüssigkeit 108 auslaufen.

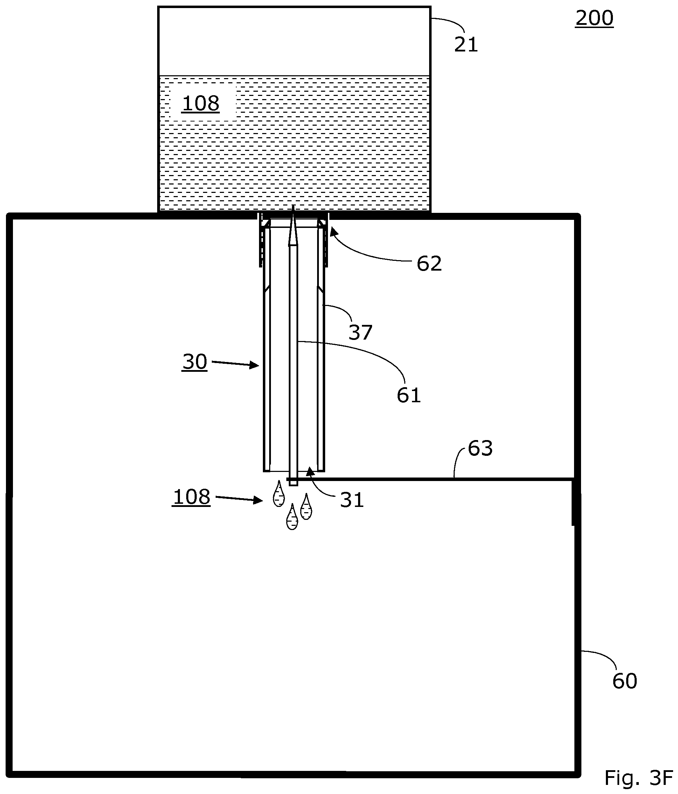

In Fig. 3F ist ein erstes Gesamtsystem 200 mit (Puffer-)Tank 60 und Vorrichtung 20 gezeigt, wobei die Vorrichtung 20 einen Container 21 samt Schutzschicht 40 (hier eine Folie 41) und Abgabevorrichtung 30 umfasst. Am Tank 60 ist eine obenliegende Öffnung 62 vorgesehen, die ein Einführen der Abgabevorrichtung 30 in das Innere des Tanks 60 ermöglicht. Im Bereich der obenliegende Öffnung 62 sitzt ein mechanisches Gegenstück 61 (hier in Nadelform), das beim Einführen der Abgabevorrichtung 30 mit der Schutzschicht 40, hier in Form einer Folie 41, in mechanische Wechselwirkung tritt, um die Folie 41 zu durchstossen. In Fig. 3F ist der Zustand kurz nach dem Durchstossen in schematischer Form angedeutet. Die Tropfen unterhalb der Auslassöffnung 31 deuten an, dass die Flüssigkeit 108 aufgrund der Schwerkraftwirkung durch das Innere der Abgabevorrichtung 30 hindurch in den Tank 60 läuft. Das mechanische Gegenstück 61 kann mit Befestigungsmitteln 63 im Tank 60 statisch befestigt sein, wie in Fig. 3F schematisch dargestellt.

Vorzugsweise sind bei allen Ausführungsformen Mittel vorgesehen, um ein Nachströmen von Luft zu ermöglichen, damit sich kein Unterdruck im Container 21 bildet, der ein Auslaufen der Flüssigkeit 108 verhindert oder verlangsamt.

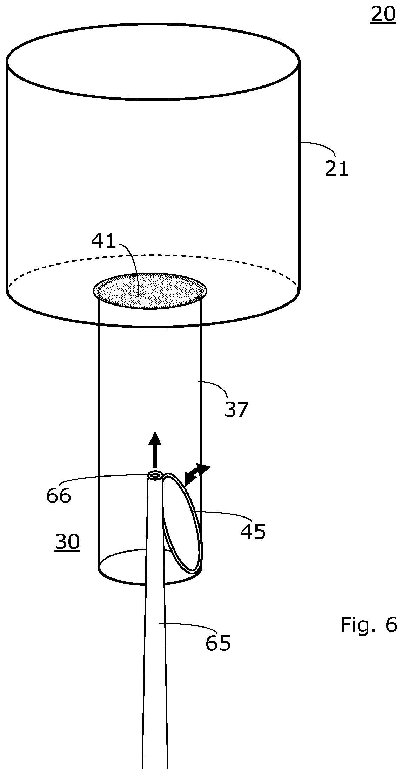

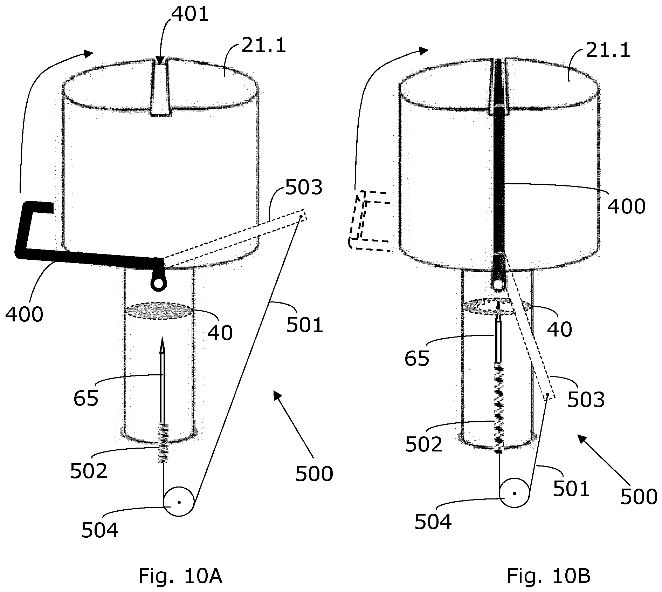

Je nach Ausführungsform kann das mechanische Gegenstück 61 als Nadel (wie in Fig. 3F und in den Figuren 10A, 10B angedeutet), als Hohlnadel 65 (wie in Fig. 6 angedeutet), oder z.B. als Hohlzylinder mit scharfkantiger Oberkante ausgeführt sein.

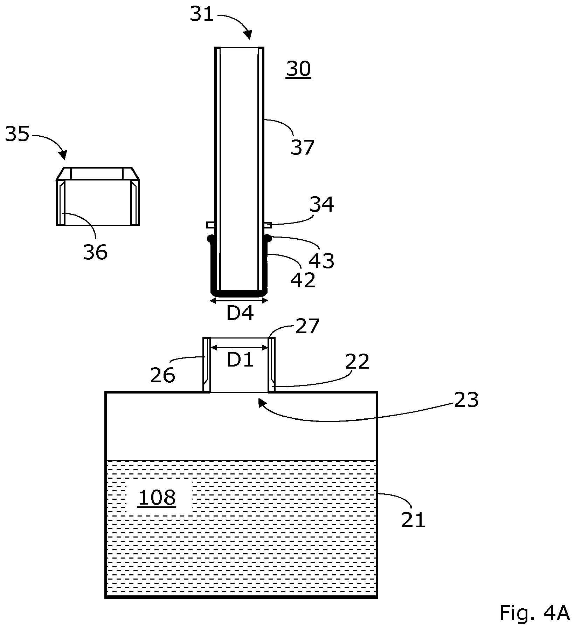

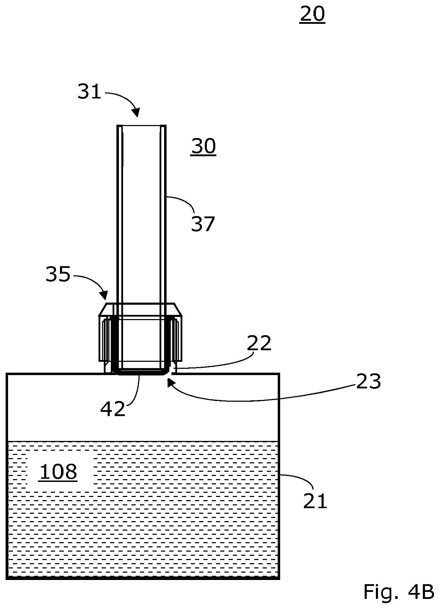

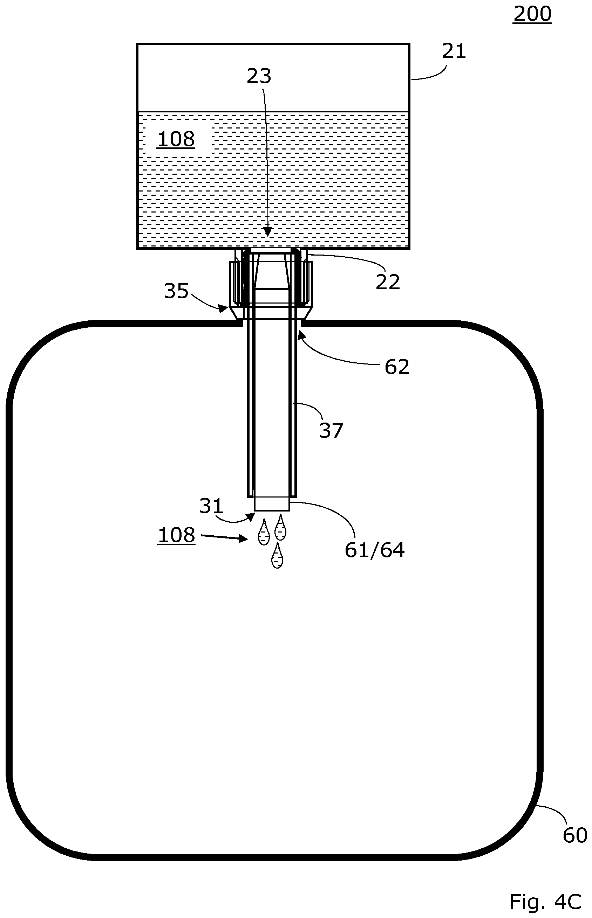

In den Figuren 4A, 4B und 4C ist eine weitere Ausführungsform der Erfindung gezeigt. Fig. 4A zeigt die Situation nach dem Befüllen mit Flüssigkeit 108 und vor dem Anbringen einer Abgabevorrichtung 30 samt Membran 42, die als Schutzschicht 40 dient. Hier kommt eine elastische Membrane 42 zum Einsatz, die über den untersten Bereich der Abgabevorrichtung 30 übergezogen oder übergestülpt wird, wie in Fig. 4A zu erkennen ist. Die elastische Membrane 42 ist in den Figuren bewusst zu dick gezeigt, um sie deutlich sichtbar zu machen. In der Realität ist die Dicke der Membrane 42 geringer. Die Abgabevorrichtung 30 umfasst hier einen aussen liegenden Kragen 34, der in Fig. 4A schematisch dargestellt ist, und eine Überwurfmutter 35. Die Überwurfmutter 35 hat ein Innengewinde 36, das komplementär zu einem Aussengewinde 26 des Stutzens 22 ausgelegt ist.

Eine Membran 42 ist vorzugsweise bei allen Ausführungsformen aus einem dünnem, nicht-reißfesten Kunststoff gefertigt, der durch mechanische Wechselwirkung mit dem Gegenstück 61 zerstört werden kann.

Vorzugsweise kommt bei allen Ausführungsformen eine Membran 42 zum Einsatz, deren Verformungsverhalten (d.h. deren Elastizität) und physikalische Bersteigenschaft (d.h. deren Versagenseigenschaften) so eingestellt wurden, dass die Membran 42 bei der mechanischen Wechselwirkung mit dem Gegenstück 61 zerstört wird und sich die Reste der Membran 42 zurückziehen/zusammenziehen. Bei gleichmäßigem Flächendruck sollte sich die Membran 42 dehnen lassen, wohingegen sie bei einer punktuellen Belastung durch Einwirkung des Gegenstücks 61 zerbersten soll.

Vorzugsweise kommt bei allen Ausführungsformen eine Membran 42 aus vulkanisiertem Kautschuk zum Einsatz.

Vorzugsweise kommt bei allen Ausführungsformen eine Membran 42 aus Polyethylen (PE), Polyurethan (PUR) oder Polyisopren zum Einsatz.

Fig. 4B zeigt den Container 21 nach dem Anbringen der Abgabevorrichtung 30 samt Membrane 42 und dem Anbringen der Überwurfmutter 35, die zum Fixieren der Abgabevorrichtung 30 samt Membrane 42 dient. Die Abgabevorrichtung 30 samt Membrane 42 wird ins Innere des Stutzens 22 eingeschoben. Dann wird die Überwurfmutter 35 mit dem Gewinde 26 des Stutzens 22 verschraubt. Die Überwurfmutter 35 liegt am Kragen 34 an und zieht beim Festdrehen der Überwurfmutter 35 die Abgabevorrichtung 30 samt Membrane 42 ins Innere des Stutzens 22 hinein.

Die elastische Membrane 42 kann optional einen umlaufenden Wulst 43 umfassen, der in Fig. 4A gut zu erkennen ist. Dieser Wulst 43 verleiht der Membran 42 einerseits Festigkeit und andererseits dient er als Dichtung, die im montierten Zustand zwischen dem oberen, ringförmigen Rand 27 des Stutzens 22 und dem Kragen 34 liegt. Beim Festdrehen der Überwurfmutter 35 wird der Wulst 43 zusammen gedrückt und sorgt somit als Dichtung.

Das mechanische Gegenstück 61 kann als Nadel (wie z.B. in Fig. 3E angedeutet), als Hohlnadel 65 (wie in Fig. 6 angedeutet), oder z.B. als Hohlzylinder mit scharfkantiger Oberkante ausgeführt sein, um beim Einbringen der Abgabevorrichtung 30 in eine Öffnung 62 eines Tanks 60 die elastische Membrane 42 zu zerstören. Aufgrund der Elastizität zerplatzt die Membrane 42 wenn sie mit dem Gegenstück 61 in Kontakt kommt und gibt dadurch den Durchtritt zwischen Container 21 und der Abgabevorrichtung 30 frei. Analog zu Fig. 3F kann dann Flüssigkeit 108 austreten und in den Tank 60 laufen.

In Situationen in denen kein zwischengeschalteter Tank 60 zum Einsatz kommt, kann die Vorrichtung 20 zum Beispiel direkt oder indirekt mit einer Treibstoffleitung 203 verbunden werden, wie in Fig. 3E angedeutet. Die Verbindung kann z.B. mittels eines Übergangselements 213 erfolgen. Das Übergangselement 213 kann eine optionale Treibstoffpumpe und/oder einen Treibstofffilter umfassen.

In Fig. 4C ist ein zweites Gesamtsystem 200 mit Tank 60 und Vorrichtung 20 gezeigt, wobei die Vorrichtung 20 einen Container 21 samt Schutzschicht 40 (hier eine Membran 42) und Abgabevorrichtung 30 umfasst. Am Tank 60 ist eine obenliegende Öffnung 62 vorgesehen, die ein Einführen der Abgabevorrichtung 30 in das Innere des Tanks 60 ermöglicht. Im Bereich der obenliegende Öffnung 62 sitzt ein mechanisches Gegenstück 61 (hier in Form eines Hohlzylinders 64), das beim Einführen der Abgabevorrichtung 30 mit der Schutzschicht 40, hier in Form einer Membran 42, in mechanische Wechselwirkung tritt, um die Membran 42 zu durchstossen. Im gezeigten Beispiel kommt ein Hohlzylinder 64 mit scharfkantiger Oberkante als mechanisches Gegenstück 61 zum Einsatz. Der Hohlzylinder 64 hat einen Aussendruchmesser, der genau an den Innendurchmesser der Abgabevorrichtung 30 und den Durchmesser der Auslauföffnung 23 des Containers 21 angepasst ist.

In Fig. 4C ist der Zustand kurz nach dem Durchstossen in schematischer Form angedeutet. Die Tropfen unterhalb der Auslassöffnung 31 deuten an, dass die Flüssigkeit 108 durch das Innere des mechanischen Gegenstücks 61 hindurch in den Tank 60 läuft. Bei der gezeigten Ausführungsform läuft die Flüssigkeit 108 nur durch den Hohlzylinder 64 (der hier als Gegenstück 61 dient) hindurch in den Tank 60. Das Innere der Abgabevorrichtung 30 wird nicht benetzt. Wenn man nach dem Umfüllen der Flüssigkeit in den Tank 60 die Vorrichtung 20 abnimmt, kann man das Innere der Abgabevorrichtung 30 mit dem Finger berühren, ohne mit Resten der Flüssigkeit 108 in Kontakt zu kommen.

Der Hohlzylinder 64 kann mit Befestigungsmitteln im Tank 60 befestigt sein, die in Fig. 4C nicht gezeigt sind. Der Hohlzylinder 64 kann auch beweglich gelagert sein (z.B. analog der Nadel in zu Fig. 10A, 10B).

In den folgenden Absätzen und den zugehörigen Figuren werden Details weiterer möglicher Ausführungsformen beschrieben. Diese Details lassen sich jeweils auf die anderen Ausführungsformen anwenden und mit anderen beschriebenen Mitteln der Erfindung kombinieren.

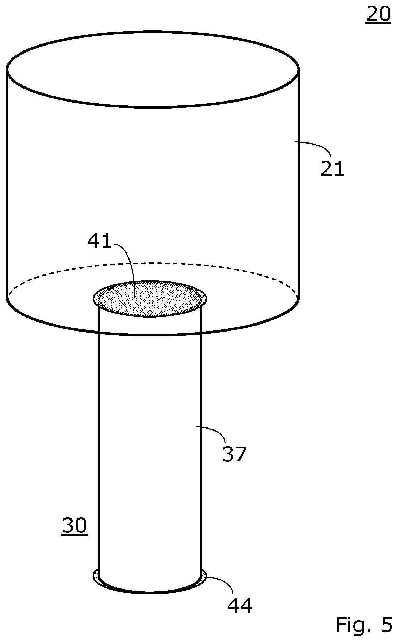

Fig. 5 zeigt eine stark schematisierte Perspektivdarstellung eines weiteren Containers 21 mit einer Abgabevorrichtung 30, die mit zwei Schutzschichten (hier in Form zweier kreisförmiger Folien 41, 44) versehen ist. Die erste Folie 41 sitzt, wie beschrieben, im Bereich des Übergangs von der Abgabevorrichtung 30 in den Container 21. Die zweite Folie 44 (auch untere Folie genannt) sitzt im Bereich der Auslassöffnung 31 der Abgabevorrichtung 30. Die zweite Folie 44 dient als sogenanntes Schutzmittel 60. Die Folien 41 und/oder 44 können aufgeklebt, anvulkanisiert, festgeklemmt oder z.B. durch den Einsatz von Gewinden und (Überwurf-)Muttern angeschraubt sein. Eine Lösung nach Fig. 5 bietet einen doppelten Schutz gegen unbeabsichtigte Entnahme oder gegen Manipulation.

Fig. 6 zeigt eine stark schematisierte Perspektivdarstellung eines weiteren Containers 21 mit einer Abgabevorrichtung 30, die mit einer Schutzschicht 40 (hier in Form einer kreisförmigen Folie 41) und einem unten liegenden (mechanischen) Manipulationsschutz 45 versehen ist. Der Manipulationsschutz 45 dient als zusätzliches Schutzmittel. Es kommt bei dem gezeigten Beispiel eine Hohlnadel 65 als mechanisches Gegenstück 61 zum Einsatz. Die Hohlnadel 65 sitzt wiederum in einem Tank 60 oder einem Fahrzeug 201, der/das hier nicht gezeigt ist. Beim Einbringen der Abgabevorrichtung 30 in eine Öffnung 62 des Tanks 60 oder des Fahrzeugs 201 drückt die Hohlnadel 65 den Manipulationsschutz 45 zur Seite. Wenn die Abgabevorrichtung 30 dann tiefer in die Öffnung 62 eingeführt wird, durchstösst die ringförmige Oberkante 66 der Hohlnadel 65 die Folie 41 und öffnet somit den Durchgang 23 vom Container 21 zum Inneren der Abgabevorrichtung 30.

Vorzugsweise ist der Manipulationsschutz 45 bei allen Ausführungsformen vorgesehen. Er kann bei allen Ausführungsformen so ausgelegt sein, dass nur eine Hohlnadel 65 oder ein anderes mechanisches Gegenstück 61 das Öffnen des Manipulationsschutzes 45 zulässt oder ermöglicht.

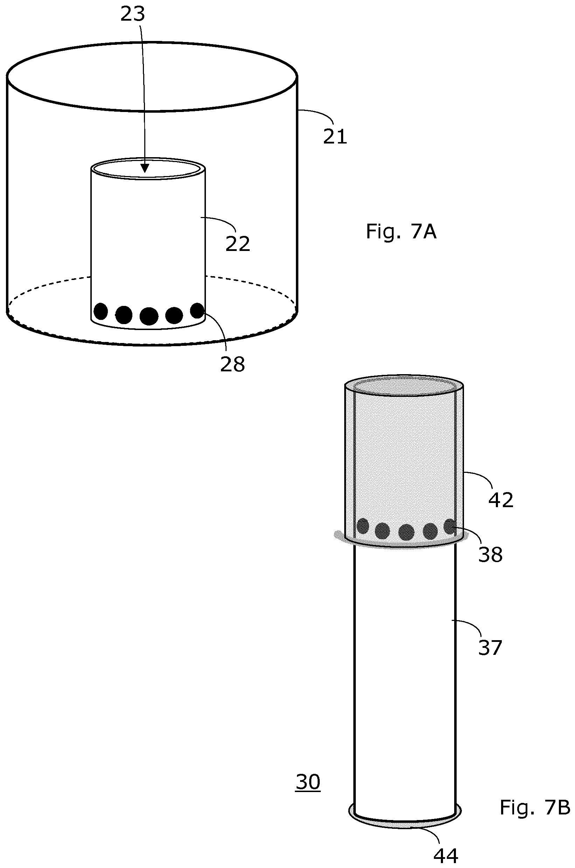

Fig. 7A zeigt eine stark schematisierte Perspektivdarstellung eines weiteren Containers 21, der mit einem mindestens teilweise innen liegenden Stutzen 22 versehen ist. An dem Stutzen 22 sind Durchlässe 28 (hier in Kreisform) vorgesehen, die im Bereich des tiefsten Punkts des Containers 21 liegen, um alle Flüssigkeit 108 aus dem Container 21 durch Schwerkraftwirkung ablaufen lassen zu können. Der Stutzen 22 weist hier eine oben liegende Auslassöffnung 23 auf. Diese Auslassöffnung 23 ist optional.

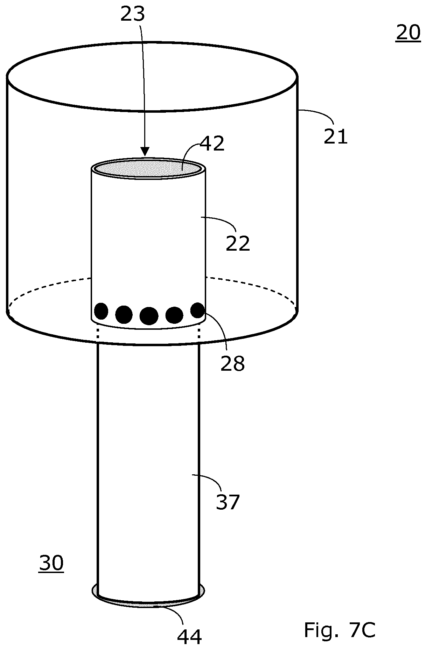

Fig. 7B zeigt eine stark schematisierte Perspektivdarstellung einer Abgabevorrichtung 30, die mit einer elastischen Membran 42 versehen ist. Die Membran 42 kann z.B. in Form eines Überziehers ausgebildet sein, wie bereits im Zusammenhang mit Fig. 4A beschrieben. Auch an der Abgabevorrichtung 30 sind Durchlässe 38 (hier in Kreisform) vorgesehen, die so ausgebildet und positioniert sind, dass sie sich im Wesentlichen mit den Durchlässen 28 am Stutzen 22 decken, wenn die Abgabevorrichtung 30, wie in Fig. 7C gezeigt, in den Stutzen 22 eingesteckt wurde. Optional kann eine untere Folie 44, wie bereits beschrieben, vorgesehen sein, um zusätzlichen Manipulationsschutz zu bieten.

Fig. 7C zeigt eine stark schematisierte Perspektivdarstellung einer entsprechenden Vorrichtung 20 umfassend einen Container 21 nach Fig. 7A und eine Abgabevorrichtung 30 nach Fig. 7B. Wenn nun ein mechanisches Gegenstück 61 (nicht in Fig. 7C gezeigt) zum Einsatz kommt, dann wird die Membran 42 zerstört. Die zerstörte Membran 42 gibt die Durchlässe 28 und 38 frei, so dass Flüssigkeit 108 aus dem Container 21 durch die Durchlässe 28 und 38 hindurch in die Abgabevorrichtung 30 und einen Tank 60 oder direkt in eine Treibstoffleitung 203 laufen kann. Wenn auch eine Auslassöffnung 23 vorgesehen ist, gibt die zerstörte Membran 42 auch diese Auslassöffnung 23 frei. Dann kann auch durch die Auslassöffnung 23 Flüssigkeit 108 aus dem Container 21 in die Abgabevorrichtung 30 und einen Tank 60 laufen.

Eine Ausführungsform mit Durchlässen 28 und 38 und mit Auslassöffnung 23 hat den Vorteil, dass problemlos Luft nachströmen kann und sich kein Unterdruck bildet, der ein Auslaufen verzögert oder verhindert.

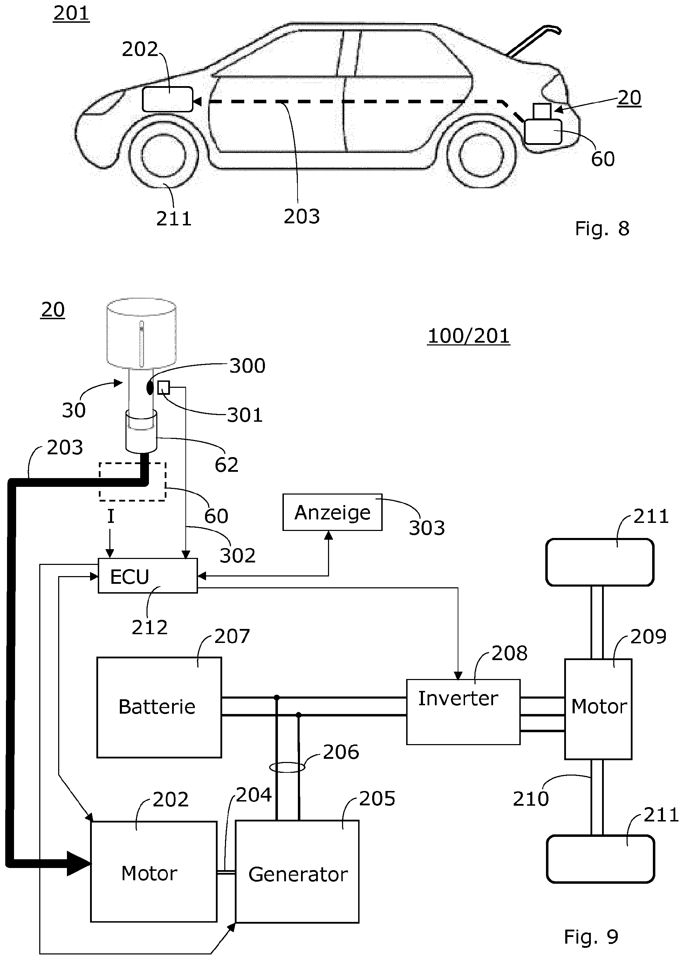

Fig. 8 zeigt eine stark schematisierte Ansicht eines Fahrzeugs 201 im Moment des Umfüllens eines Treibstoffs 108 aus einer Vorrichtung 20 in einen fahrzeugseitigen Tank 60. Es kann sich bei dem Fahrzeug 201 z.B. um ein Elektro-Fahrzeug 201 handeln, das mit einem Motor 202 ausgestattet ist, der als Range-Extender dient. Dieser Motor 202 wird, wie in Fig. 8 schematisch angedeutet, über eine Treibstoffleitung 203 mit Treibstoff 108 versorgt, der aus dem Tank 60 entnommen wird.

Gemäss Erfindung findet das Betanken des Tanks 60 drucklos und ohne Einsatz von Pumpen oder dergleichen statt. Treibstoff 108 läuft aufgrund der Schwerkraftwirkung vom Container 21 der Vorrichtung 20 in den Tank 60, sobald die Schutzschicht 40 geöffnet wurde. Die Vorrichtung 20 ist also bei allen Ausführungsformen zur Schwerkraftbetankung ausgelegt. Diese Schwerkraftbetankung erfolgt bei allen Ausführungsformen stromlos, da keine Pumpen angetrieben werden müssen. Das Betanken kann also jederzeit und an jedem Ort erfolgen, ohne dass ein Stromanschluss oder gar eine andere Form von Infrastruktur erforderlich wäre.

Die Vorrichtungen 20 sind absolut sicher und können daher zum Beispiel über den Detailhandel oder sogar über einen Versandhandel vertrieben werden. Vor allem wenn Methanol als Treibstoff 108 zum Einsatz kommt, ist dieser Ansatz besonders vorteilhaft, da Methanol nur schwer entzündlich ist Ausserdem kann Methanol biologisch abgebaut werden, falls es in Wasser gelangen sollte.

Fehlmanipulationen werden bei allen Ausführungsformen verhindert oder wenigstens so erschwert, dass Laien nicht unbewusst oder unbedarft mit der Flüssigkeit 108 in Kontakt kommen.

Vorzugsweise umfassen alle Ausführungsformen Sicherungsmittel 50, um ein Lösen und/oder Entfernen und/oder unbewusstes Manipulieren der Abgabevorrichtung 30 zu verhindern. Das Sicherungsmittel 50 ist jedoch optional.

In Fig. 3B ist ein Beispiel für ein Sicherungsmittel 50 gezeigt, das ein Rastelement 51 (z.B. eine federnd gelagerte Kugel) und eine komplementäre Aufnahmeöffnung 52 umfasst. Durch Einrasten des Rastelements 51 in der Aufnahmeöffnung 52 wird ein Verdrehen und Abschrauben der Abgabevorrichtung 30 verhindert. Vorzugsweise ist das Rastelement 51 bei allen Ausführungsformen so ausgeführt, dass es nicht manuell sondern nur mit einem (Spezial-)Werkzeug betätigt werden kann.

Vorzugsweise umfassen alle Ausführungsformen eine Banderole (aus Kunststoff oder Papier), die als Sicherungsmittel 50 dient und zu diesem Zweck um den Stutzen 22 und einen Teil der Abgabevorrichtung 30 geklebt wird. Diese Banderole versiegelt den Stutzen 22 optisch erkennbar mit der Abgabevorrichtung 30 und sichert beide gegeneinander.

Vorzugsweise umfassen alle Ausführungsformen einen Splint, eine Niete oder einen Stift, der/die als Sicherungsmittel 50 dient.

Alle Ausführungsformen der Erfindung können auch eingesetzt werden, um Alkohol aufzunehmen, zu speichern, zu transportieren und abzugeben und um den Alkohol zur Wirkungsgrad- und Leistungssteigerung einer Verbrennungskraftmaschine zu nutzen. Details hierzu sind der eingangs genannten europäischen Patentanmeldung mit der Anmeldenummer EP11155310.3 zu entnehmen.

Die Vorrichtung 20 sollte möglichst als passive Vorrichtung 20 ohne Sensor(en) und/oder Treibstoffpumpen ausgelegt sein. Beim Einsatz der Vorrichtung 20 in einem Fahrzeug 201 ist jedoch wichtig jederzeit zu "wissen", wieviel Treibstoff 108 sich noch in der Vorrichtung 20 befindet. In Fig. 1 ist angedeutet, dass die Vorrichtung 20 eine optische Füllstandsanzeige 29 aufweisen kann. Diese optionale Füllstandsanzeige 29 kann jederzeit bei Bedarf abgelesen werden. In einem automatisierten Gesamtsystem 100 jedoch ist eine genaue Füllstandermittlung erforderlich. Da kein Sensor im Inneren des Containers 21 erwünscht ist, wird eine Lösung bevorzugt, bei der an der Vorrichtung 20 abtastbare Mittel 300 angebracht sind, wie in Fig. 9 angedeutet. Im Bereich der Aufnahmeöffnung 62 ist mindestens ein Sensor 301 vorhanden, um beim oder nach dem Einbringen der Vorrichtung 20 in die Aufnahmeöffnung 62 ein charakteristisches Merkmal der Vorrichtung 20 erkennen und an eine (Motor-)Steuerung 212 übergeben zu können. Auf diesem Wege kann zum Beispiel fahrzeugseitig eine 10 Liter fassende Vorrichtung 20 von einer 20 Liter fassenden Vorrichtung 20 unterschieden werden. Falls der Vorrichtung 20 zum Versorgen eines Range-Extenders 202 mit Treibstoff 108 dient, kann relativ einfach und sehr genau der aktuelle Verbrauch ermittelt werden, da der Range-Extender 202 mit einer relativ genau vorgegebenen Drehzahl und Last betrieben wird. Fahrzeugseitig kann somit relativ genau durch die Steuerung 212 ermittelt werden, wieviel Treibstoff 108 z.B. einer 10 Liter fassenden Vorrichtung 20 bereits verbraucht wurden und wievel Resttreibstoff 108 somit noch zur Verfügung steht. Eine entsprechende Lösung ist z.B. aus dem US-Patent US 7259664 bekannt.

Fig. 9 zeigt eine stark schematisierte Ansicht der Komponenten eines Fahrzeugs 201 mit seriellem Hybridantrieb. Der Antrieb umfasst einen Verbrennungsmotor 202, der als Range-Extender eingesetzt wird und zu diesem Zweck z.B. über eine Welle 204 einen Generator 205 antreibt. Der Generator 205 erzeugt Strom, der über die Leitungen 206 in die Batterie 207 oder über einen Inverter 208 (Umrichter) an einen (oder mehrere) Elektromotoren 209 des Fahrzeugs 201 geführt werden kann. Der Elektromotor 209 kann zum Beispiel eine Achse 210 und die Räder 211 antreiben. Besonders bevorzugt sind jedoch Ausführungsformen mit Radnabenmotoren oder mit sogenannten Radnebenmotoren, wobei mindestens zwei der Räder 211 mit je einem solchen Motor ausgestattet sind.

Details einer geeigneten Konstellation von Radnebenmotoren sind der publizierten Patentanmeldung EP2199137A1 der Firma Klingelnberg AG zu entnehmen.

Falls es sich bei dem Generator 205 um einen Wechselstromgenerator handeln sollte, kommt ein Gleichrichter (nicht gezeigt) zum Einsatz. Der Inverter 208 formt die Gleichspannung der Batterie 207 oder des Generators 205 um in Wechselspannung in einer für den/die Motoren 209 geeigneten Form. Die Motorsteuerung 212 (Engine Control Unit oder ECU genannt) überwacht diese Vorgänge. Der Inverter 208 umfasst Schaltelemente, die von der ECU 212 kontrolliert und betätigt werden. Die ECU 212 wird mit Eingangsgrössen I (Signalen) von den verschiedenen relevanten Komponeten des Fahrzeugs 201 versorgt. Anhand dieser Eingangsgrössen I trifft die ECU 212 Entscheidungen und gibt Regelgrössen an den Motor 202, den Generator 205 und den Inverter 208.

Gemäss Erfindung umfasst die Vorrichtung 20 vorzugsweise bei allen Ausführungsformen abtastbare Mittel 300, die in Fig. 9 in rein schematischer Form gezeigt sind. Im Bereich der Aufnahmeöffnung 62 (z.B. im Bereich des Hohlzylinders 37) ist mindestens ein Sensor 301 vorhanden, um beim oder nach dem Einbringen der Vorrichtung 20 in die Aufnahmeöffnung 62 ein charakteristisches Merkmal (z.B. die Füllmenge) der Vorrichtung 20 erkennen und an die (Motor-) Steuerung 212 übergeben zu können. Zu diesem Zweck besteht eine Signalverbindung 302 zur ECU 212.

Besonders bevorzugt sind Ausführungsformen, bei denen ein mechanisches Merkmal als abtastbares Mittel 300 dient. So kann zum Beispiel an dem Hohlzylinder 37 eine Bohrung, Nut oder Nase vorgesehen sein, die von dem Sensor 301 erfasst werden kann. Es kann hier aber z.B. auch eine kleine Magnetplatte als abtastbares Mittel 300 dienen und der Sensor 301 kann die Position der Magnetplatte erfassen. Über die Position der Magnetplatte kann so das Volumen des Containes 21 "codiert" sein. Auf diesem Wege kann zum Beispiel fahrzeugseitig eine 10 Liter fassende Vorrichtung 20 von einer 20 Liter fassende Vorrichtung 20 unterschieden werden.

Das Gesamtsystem 100, respektive ein Fahrzeug 201, kann bei allen Ausführungsformen einen Tank 60 umfassen. Der Tank 60 ist jedoch nicht zwingend notwendig. Daher ist er in Fig. 9 strichliert dargestellt.

Beim Einsetzen der Vorrichtung 20 in ein Gesamtsystem 100 oder Fahrzeug 201 wird eine Verbindung über eine Treibstoffleitung 203 zu dem Motor 202 hergestellt. Die Treibstoffleitung 203 ist sowohl in Fig. 8 als in Fig. 9 in rein schematischer Form dargestellt. Vorzugsweise kommt eine Treibstoffpumpe (nicht gezeigt) zum Einsatz, um dem Motor 202 gleichmässig und mit ausreichendem Druck mit dem Treibstoff 108 zu versorgen. Die Treibstoffpumpe ist auch von der ECU 212 kontrollier- und steuerbar.

Das Fahrzeug 201 kann bei allen Ausführungsformen eine Kraftstoff-Anzeige 303 umfassen, die jeweils den rechnerisch von der ECU 212 ermittelten Resttreibstoff 108 im Container 21 anzeigt.

Um die Vorrichtung 20 in einem Fahrzeug 201 sichern zu können, kann bei allen Ausführungsformen ein Bügel 400 zum Einsatz kommen, wie in den Figuren 10A und 10B in stark schematisierter Form verdeutlicht. Die Vorrichtung 20 kann mit einem Aufnahmebereich 401 für einen Holm oder Schenkel des Bügels 400 versehen sein. In den Abbildungen ist ein Aufnahmebereich 401 an der Oberseite 21.1 des Containers 21 vorgesehen. Die Oberseite 21.1 kann leicht bombiert oder schräg auslegt sein, um beim Schliessen des Bügels 400 einen Anpressdruck aufzubringen, der die Vorrichtung 20 abwärts, z.B. in die Öffnung 62 hinein, drückt.

Bei dem Bügel 400 handelt es sich vorzugsweise um einen Federbügel oder um einen federnd gelagerten Bügel, damit sich dieser in den Aufnahmebereich 401 setzt. Der Bügel 400 ist im Fahrzeug 201 (z.B. am optionalen Tank 60 oder einem anderen Fahrzeugteil) schwenkbar gelagert. Die schwenkbare Lagerung ist nicht in den Figuren 10A bis 10B gezeigt.

In Fig. 10A ist der Bügel 400 in einer geöffneten Stellung gezeigt. Nach dem Einsetzen der Vorrichtung 20 in eine fahrzeugseitige Öffnung 62, kann der Bügel 400 von Hand aus der 9 Uhr Stellung in eine 12 Uhr Stellung überführt werden. Dabei ist im gezeigten Beispiel eine kleine Kraft aufzubringen, um den Holm oder Schenkel des Bügels 400 in den Aufnahmebereich 401 einschnappen zu lassen. In Fig. 10B ist die geschlossene Stellung gezeigt.

Optional kann bei allen Ausführungsformen über einen Wirkmechanismus 500 ein mechanisches Gegenstück 61 oder eine Nadel 65 betätigt werden, um die Schutzschicht 40 (z.B. in Form einer Folie 41 oder Membrane 42) zu durchstossen. Der Moment des Durchstossens ist in Fig. 10B gezeigt. Nach dem Durchstossen kann Flüssigkeit 108 (Treibstoff) aus dem Container 21 austreten und direkt oder indirekt in eine Treibstoffleitung 203 des Fahrzeugs 201 gelangen.

In den Figuren 10A und 10B ist der Wirkmechanismus 500 bewusst in stark vereinfachter Form gezeigt, um die Funktionsweise beschreiben zu können. Es gibt zahlreiche Möglichkeiten einen solchen Wirkmechanismus 500 in kleiner, robuster Bauform zu realisieren. Es können Hebelarme, Stellglieder, Zugelemente und Federn zum Einsatz kommen, um das Durchstossen zu bewirken.

In Fig. 10A zieht ein Trum 501 eine Nadel 65 nach unten. Das Trum 501 ist mit einem Ende an einem Hebel 503 befestigt. Sein zweites Ende ist mit der Nadel 65 oder einer Feder 502 verbunden. In der in Fig. 10A gezeigten Stellung befindet sich die Nadel 65 in einer unteren Position und die Druckfeder 502 ist zusammengestaucht. Wenn nun der Bügel 400 in die in Fig. 10B gezeigte Position überführt wird, bewegt sich der Hebel 503 im Uhrzeigersinn nach unten und die Spannung, die auf das Trum 501 wirkt, lässt nach. Die Druckfeder 502 expandiert und bewegt die Nadel 65 nach oben, damit die Spitze der Nadel 65 die Schutzschicht 40 durchstossen kann. Im gezeigten Beispiel wird das Trum 501 um eine Rolle 504 umgelenkt.

Das soeben beschriebene Prinzip lässt sich auch auf einen Hohlnadel oder ein Gegenstück 61 anwenden.

Die Abgabevorrichtung 30 hat vorzugsweise bei allen Ausführungsformen eine Länge, die zwischen 6 und 10 cm beträgt. Ein Teil der Länge der Abgabevorrichtung 30 kann im Inneren des Containers 21 sitzen. In diesem Fall ragt vorzugsweise nur eine Länge von 2 - 5 cm aus dem Container 21 heraus.

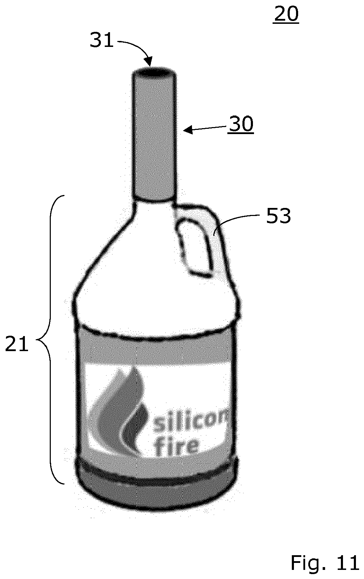

Die Vorrichtung 20 hat vorzugsweise bei allen Ausführungsformen eine Griff zum einfacheren Tragen und Handhaben. In Fig. 11 ist eine Perspektivdarstellung einer Vorrichtung 20 umfassend einen Container 21 und eine Abgabevorrichtung 30 gemäss Erfindung gezeigt. An der Vorrichtung 20 ist ein Griff 53 vorgesehen.

Die Erfindung kann auch in Booten und anderen Fahrzeugen zum Einsatz kommen. Die Erfindung kann auch in Kleinanwendungen eingesetzt werden, die einen Verbrennungsmotor oder eine Brennstoffzelle umfassen.

**Bezugszeichen:**

| | |
|---|---|
| Tankstelle | 10 |
| | |
| Vorrichtung (Tankpatrone) | 20 |
| Container | 21 |
| Oberseite | 21.1 |
| Stutzen | 22 |
| Auslauföffnung | 23 |
| Innengewinde | 24 |
| Ringschulter | 25 |
| Aussengewinde | 26 |
| oberer, ringförmiger Rand | 27 |
| Durchlässe | 28 |
| Füllstandsanzeige | 29 |
| | |
| Abgabevorrichtung | 30 |
| Auslassöffnung | 31 |
| Aussengewinde | 32 |
| ringförmige Unterkante | 33 |
| Kragen | 34 |
| Überwurfmutter | 35 |
| Innengewinde | 36 |
| Hohlzylinder | 37 |
| Durchlässe | 38 |
| | |
| Schutzschicht | 40 |
| Folie | 41 |
| Membrane | 42 |
| Wulst | 43 |
| untere Folie | 44 |
| Mechanischer Manipulationsschutz | 45 |
| | |
| Sicherungsmittel | 50 |
| Rastelement | 51 |
| Aufnahmeöffnung | 52 |
| Griff | 53 |
| | |
| Tank | 60 |
| mechanisches Gegenstück | 61 |
| obenliegende Öffnung | 62 |
| Befestigungsmittel | 63 |
| Hohlzylinder | 64 |
| (Hohl-)Nadel | 65 |
| | |
| Silicon-Fire Anlage | 100 |
| Kohlenstoffdioxid | 101 |
| Wasser / H₂O | 102 |
| Wasserstoff | 103 |
| Durchführen einer Elektrolyse | 105 |
| Katalytische Reaktion | 106 |
| Methanol | 108 |
| | |
| Gesamtsystem | 200 |
| Fahrzeug | 201 |
| Motor (Range-Extender) | 202 |
| Treibstoffleitung | 203 |
| Welle | 204 |
| Generator | 205 |
| Leitungen | 206 |
| Batterie | 207 |
| Inverter (Umrichter) | 208 |
| E-Motor | 209 |
| Achse | 210 |
| Räder | 211 |
| Motorsteuerung | 212 |
| Ubergangselement | 213 |
| | |
| abtastbare Mittel | 300 |
| Sensor(en) | 301 |
| Signalverbindung | 302 |
| Kraftstoff-Anzeige | 303 |
| | |
| Bügel | 400 |
| Aufnahmebereich | 401 |
| | |
| Wirkmechanismus | 500 |
| Trum | 501 |
| Druckfeder | 502 |
| Hebel | 503 |
| Rolle | 504 |
| | |
| Mindestabstand | A |
| Innendurchmesser | D |
| Innendurchmesser | D1 |
| Aussendurchmesser | D2 |
| Innendurchmesser | D3 |
| Eingangsgrössen | I |

## Patentansprüche

1. Vorrichtung (20) zum Aufnehmen, Speichern, Transportieren und Abgeben einer Flüssigkeit (108), die einen Container (21) mit einer Abgabevorrichtung (30) zum Abgeben der Flüssigkeit (108) umfasst, wobei ein Rohr- oder Schlauch-Körper als Abgabevorrichtung (30) dient und an einer ersten containernahen Seite mit dem Container (21) verbunden ist und an einer zweiten Seite eine Auslassöffnung (31) aufweist, wobei
- sie im Bereich der ersten containernahen Seite eine Schutzschicht (40, 41, 42) umfasst, die im intakten Zustand ein Austreten der Flüssigkeit (108) vom Container (21) in die Abgabevorrichtung (30) verhindert, und wobei
- die Schutzschicht (40) innenliegend ist,
**dadurch gekennzeichnet, dass**
- die Schutzschicht (40) gegenüber der Auslassöffnung (31) um einen Mindestabstand (A) zurückversetzt angeordnet ist, damit die Schutzschicht (40) nicht mit einem Finger erreicht werden kann, wobei der Mindestabstand (A) 6 cm beträgt und die Abgabevorrichtung (30) mindestens teilweise einen Innendurchmesser (D) hat, der kleiner ist als 1 cm.

2. Vorrichtung (20) nach Anspruch 1, **dadurch gekennzeichnet, dass** eine Folie (41) oder eine Membrane (42) als Schutzschicht (40) dient.

3. Vorrichtung (20) nach Anspruch 1 oder 2, **dadurch gekennzeichnet, dass** die Abgabevorrichtung (30) im Bereich der Auslassöffnung (31) ein Schutzmittel (60) umfasst, das die Auslassöffnung (31) verschließt.

4. Vorrichtung (20) nach Anspruch 1, 2 oder 3, **dadurch gekennzeichnet, dass** die Abgabevorrichtung (30) ein integraler Bestandteil des Containers (21) ist.

5. Vorrichtung (20) nach Anspruch 1, 2 oder 3, **dadurch gekennzeichnet, dass** die Abgabevorrichtung (30) werksseitig mit dem Container (21) verbindbar ist.

6. Vorrichtung (20) nach Anspruch 5, **dadurch gekennzeichnet, dass** sie ein Sicherungsmittel (50) umfasst, um ein Trennen der Abgabevorrichtung (30) vom Container (21) zu verhindern, zu erschweren oder ein Trennen sichtbar zu machen.

7. Vorrichtung (20) nach Anspruch 1 oder 2, **dadurch gekennzeichnet, dass** der Container (21) in einem Horizontalschnitt eine runde, ovale, polygonale oder rechteckige Form und in einem Vertikalschnitt eine runde, ovale, rechteckige oder trichterförmige Form hat.

8. Gesamtsystem (200) mit einer Vorrichtung (20) nach einem der vorhergehenden Ansprüche 1 bis 7, mit einer Aufnahmeöffnung (62), und mit einem kraftstoffführenden Leitungssystem (203, 213), wobei die Dimension und Platzierung der Aufnahmeöffnung (62) so gewählt ist, dass mindestens ein Teil der Abgabevorrichtung (30) in diese Aufnahmeöffnung (62) eingeführt werden kann und wobei die Aufnahmeöffnung (62) so mit dem kraftstoffführenden Leitungssystem (203, 213) in Verbindung steht, dass Flüssigkeit (108) aus der Vorrichtung (20) durch die Aufnahmeöffnung (62) hindurch in das kraftstoffführenden Leitungssystem (203, 213) gelangen kann.

9. Gesamtsystem (200) nach Anspruch 8, **dadurch gekennzeichnet, dass** es einen (Puffer-)Tank (60) umfasst, wobei die Vorrichtung (20) durch die Aufnahmeöffnung (62) hindurch mit dem (Puffer-)Tank (60) verbindbar ist und wobei das kraftstoffführende Leitungssystem (203) mit dem (Puffer-) Tank (60) verbunden ist.

10. Gesamtsystem (200) nach Anspruch 8 oder 9, **dadurch gekennzeichnet, dass** es einen Verbrennungsmotor (202) oder eine Brennstoffzelle umfasst, die über das kraftstoffführende Leitungssystem (203) mit dem Tank (60) verbindbar ist.

11. Gesamtsystem (200) nach Anspruch 8 oder 9, **dadurch gekennzeichnet, dass** es einen Verbrennungsmotor (202) und einen Generator (205) umfasst, wobei der Verbrennungsmotor (202) als Range-Extender ausgelegt ist und über das kraftstoffführende Leitungssystem (203) so mit der Flüssigkeit (108) versorgbar ist, dass der Verbrennungsmotor (202) in einem definierten Drehzahlbereich betreibbar ist.

12. Gesamtsystem (200) nach Anspruch 11, **dadurch gekennzeichnet, dass** an der Vorrichtung (20) abtastbare Mittel (300) angebracht sind und dass im Bereich der Aufnahmeöffnung (62) mindestens ein Sensor (301) vorhanden ist, um beim oder nach dem Einbringen der Vorrichtung (20) in die Aufnahmeöffnung (62) ein charakteristisches Merkmale der Vorrichtung (20) erkennen und an eine Steuerung (212) übergeben zu können.

13. Fahrzeug (201) mit einem Gesamtsystem (200) nach einem der Ansprüche 8, 9, 10, 11 oder 12.

## Claims

1. Apparatus (20) for receiving, storing, carrying and discharging a liquid (108), which comprises a container (21) with a discharging device (30) for discharging the liquid (108), wherein a pipe or hose body serves as discharging device (30) and is at a first side close to the container connected to the container (21) and at a second side comprises a discharge opening (31), wherein
- it comprises in the area of the first side close to the container a protective layer (40, 41, 42), which in a sound state prevents an escaping of the liquid (108) from the container (21) into the discharging device (30),
**characterized in that**
- the protective layer (40, 41, 42) is positioned with an offset of a minimum distance (A) with respect to the discharge opening (31), so that the protective layer (40) cannot be reach with a finger, wherein the minimum distance (A) is at least 6 cm and the discharging device (30) at least partially has an inner diameter (D) which is smaller than 1cm.

2. The apparatus (20) according to claim 1, **characterized in that** a foil (41) or a membrane (42) serves as protective layer (40).

3. The apparatus (20) according to claim 1 or 2, **characterized in that** the discharging device (30) comprises a protective means (60) in the area of the discharge opening (31), which closes the discharge opening (31).

4. The apparatus (20) according to claim 1, 2, or 3, **characterized in that** the discharging device (30) is an integral part of the container (21).

5. The apparatus (20) according to claim 1, 2, or 3, **characterized in that** the discharging device (30) connectable at the factory with the container (21).

6. The apparatus (20) according to claim 5, **characterized in that** it comprises securing means (50) for preventing a separation of the discharging device (30) from the container (21), or to make a separating difficult or a separation visible.

7. The apparatus (20) according to claim 1 or 2, **characterized in that** the container (21) has a round, oval, polygonal or rectangular shape in a horizontal section and a round, oval, rectangular or funnel shape in a vertical section.

8. Overall system (200) comprising an apparatus (20) according to one of the preceding claims 1 to 7, with a receiving opening (62), and with a fuel conducting pipe system (203, 213), wherein the dimension and positioning of the receiving opening (62) is chosen so that at least a part of the discharging device (30) can be inserted into the receiving opening (62), and wherein the receiving opening (62) is coupled with the fuel conducting pipe system (203, 213) so that liquid (108) from the apparatus (20) can reach the fuel conducting pipe system (203, 213) via the receiving opening (62).

9. The overall system (200) according to claim 8, **characterized in that** it comprises a (buffer-)tank (60), wherein the apparatus (20) is connectable via the receiving opening (62) with the (buffer-)tank (60) and wherein the fuel conducting pipe system (203, 213) is connected with the (buffer-) tank (60).

10. The overall system (200) according to claim 8 or 9, **characterized in that** it comprises a combustion engine (202) or a fuel cell, which is connectable via the fuel conducting pipe system (203, 213) with the tank (60).

11. Overall system (200) according to claim 8 or 9, **characterized in that** it comprises a combustion engine (202) and a generator (205), the combustion engine (202) being equipped as range-extender and being supplyable via the fuel conducting pipe system (203) with the liquid (108) so that the combustion engine (202) can be operated at a defined rotational-speed range.

12. Overall system (200) according to claim 11, **characterized in that** sampling means (30) are attached to the apparatus (20) and that in the area of the receiving opening (62) at least one sensor (301) is provided in order to recognize a characteristic feature of the apparatus (20) while or after inserting the apparatus (20) in the receiving opening (62) and to hand it over to a control (212).

13. Vehicle (201) with an overall system (200) according to one of the claims 8, 9, 10, 11 or 12.

## Revendications

1. Dispositif (20) pour recevoir, stocker, transporter et distribuer un liquide (108), comprenant un conteneur (21) muni d'un dispositif de distribution (30) servant à distribuer le liquide (108), dans lequel un corps de tube ou de tuyau sert de dispositif de distribution (30) et est raccordé au conteneur (21) au niveau d'un premier côté proche du conteneur et présente au niveau d'un deuxième côté une ouverture de sortie (31),
- le dispositif comprenant dans la zone du premier côté proche du conteneur une couche de protection (40, 41, 42) qui, lorsqu'elle est intacte, empêche le liquide (108) de sortir du conteneur (21) pour entrer dans le dispositif de distribution (30), et
- la couche de protection (40) étant interne,
**caractérisé en ce que** la couche de protection (40) est agencée de manière décalée vers l'arrière par rapport à l'ouverture de sortie (31) d'une distance minimale (A), de sorte que la couche de protection (40) ne peut pas être atteinte avec un doigt, la distance minimale (A) étant de 6 cm et le dispositif de distribution (30) ayant au moins partiellement un diamètre intérieur (D) inférieur à 1 cm.

2. Dispositif (20) selon la revendication 1, **caractérisé en ce qu'**une feuille (41) ou une membrane (42) sert de couche de protection (40).

3. Dispositif (20) selon la revendication 1 ou 2, **caractérisé en ce que** le dispositif de distribution (30) comprend dans la zone de l'ouverture de sortie (31) un moyen de protection (60) qui ferme l'ouverture de sortie (31).

4. Dispositif (20) selon la revendication 1, 2 ou 3, **caractérisé en ce que** le dispositif de distribution (30) fait partie intégrante du conteneur (21).

5. Dispositif (20) selon la revendication 1, 2 ou 3, **caractérisé en ce que** le dispositif de distribution (30) peut être raccordé en usine au conteneur (21).

6. Dispositif (20) selon la revendication 5, **caractérisé en ce qu'**il comprend un moyen de blocage (50) pour empêcher ou gêner tout détachement du dispositif de distribution (30) du conteneur (21) ou pour rendre un tel détachement visible.

7. Dispositif (20) selon la revendication 1 ou 2, **caractérisé en ce que** le conteneur (21), dans une coupe horizontale, a une forme ronde, ovale, polygonale ou rectangulaire et, dans une coupe verticale, une forme ronde, ovale, rectangulaire ou en forme d'entonnoir.

8. Système complet (200) comprenant un dispositif (20) selon l'une des revendications précédentes 1 à 7, comprenant une ouverture de réception (62) et un système de conduites de carburant (203, 213), les dimensions et l'emplacement de l'ouverture de réception (62) étant choisis de sorte qu'au moins une partie du dispositif de distribution (30) puisse être introduite dans cette ouverture de réception (62), l'ouverture de réception (62) étant en liaison avec le système de conduites de carburant (203, 213) de sorte que le liquide (108) passe depuis le dispositif (20) par l'ouverture de réception (62) pour atteindre le système de conduites de carburant (203, 213).

9. Système complet (200) selon la revendication 8, **caractérisé en ce qu'**il comprend un réservoir (tampon) (60), le dispositif (20) pouvant être raccordé au réservoir (tampon) (60) par l'ouverture de réception (62) et le système de conduites de carburant (203) étant raccordé au réservoir (tampon (60).

10. Système complet (200) selon la revendication 8 ou 9, **caractérisé en ce qu'**il comprend un moteur à combustion (202) ou une pile à combustible qui peut être raccordée au réservoir (60) par le biais du système de conduites de carburant (203).

11. Système complet (200) selon la revendication 8 ou 9, **caractérisé en ce qu'**il comprend un moteur à combustion (202) et un générateur (205), le moteur à combustion (202) étant conçu comme un Range-Extender (prolongateur d'autonomie) et pouvant être alimenté en liquide (108) par le biais du système de conduites de carburant (203), de sorte que le moteur à combustion (202) peut être utilisé dans une plage de vitesse de rotation définie.

12. Système complet (200) selon la revendication 11, **caractérisé en ce qu'**il est monté sur le dispositif (20) des moyens détectables (300) et **en ce qu'**il y a dans la zone de l'ouverture de réception (62) au moins un capteur (301) pour pouvoir détecter, pendant ou après l'introduction du dispositif (20) dans l'ouverture de réception (62) des caractéristiques du dispositif (20) et pouvoir les transmettre à une commande (212).

13. Véhicule (201) comprenant un système complet (200) selon l'une des revendications 8, 9, 10, 11 ou 12.
